# EUROPEAN PATENT SPECIFICATION

(11) **EP 1 584 534 B1**
(45) Date of publication and mention of the grant of the patent: **26.03.2008**
(21) Application number: 05006750.3
(22) Date of filing: 29.03.2005
(51) Int. Cl.: B60T 17/08, B60T 13/22, F16D 65/00

(54) **Combined braking equipment for vehicles**
Kombinierte Bremsausrüstung für ein Fahrzeug
Implantation de freinage combinée pour véhicules

(30) Priority: 06.04.2004 IT UD20040067
(43) Date of publication of application: 12.10.2005
(73) Proprietor: PRO-MEC S.r.l., 33030 Coseano (UD) (IT)
(72) Inventor: Pozzo, Luigino, 33030 Coseano (UD) (IT)
(74) Representative: D'Agostini, Giovanni

(56) References cited:
- WO-A-02/092407
- GB-A- 1 381 111
- US-A- 4 588 057

## Description

### Object

This invention relates to a device for the application of a negative brake in all the braking systems equipped with a mechanical hand brake activated with the aid of a lever.

### Background Art

In the present state of the art it is well known that in the transmission of motion to vehicle driving wheels, particularly industrial vehicles such as tractors, elevating platform trucks and operating machines, electric motors or independent hydraulic engines are used, one per driving wheel, in which each motor is connected to the axis of the wheel by a transmission system with incorporated reducer and brake. In this case, the use of separated brakes generally integrated into the wheels is avoided, instead said brakes are brakes into the reducer system of the transmission. In this case, there is the advantage of a considerable cost reduction and simplification of the whole traction and braking system.

According to the machine typology, the brakes installed can be of the type:
- positive: service brake with hydraulic or mechanical activation and a mechanical parking brake, normally lever-operated. The brake is normally unlocked and by duly varying the pressure in a piston or the force on the lever these act on the friction system, modulating the required braking pair.
- negative: absent service brake or obtained with unconventional systems such as counter-current braking, exhaust brake etc. and parking brake with mechanical activation (normally with springs) and hydraulic unlocking, that is to say the springs constantly maintain the brake activated; the application of hydraulic fluid in a piston suitably connected to the springs allows the elasticity of the springs to be obtained and thus the unlocking of the brake.
- combined negative+positive: it is in essence a combination of two types of brake that operate independently. The service brake (positive) in this case is of the type with hydraulic activation while the negative functions as a parking brake.
The prior art solutions on which this invention is particularly directed is detected in WO02/092407 (STEINBOCK GMBH; LOG HYDRAULIK GMBH; ZENS, ROBERT; STINGL, KONRAD) and GB1381111 (REECE R.).

### Drawbacks of the Present State of the Art

The drawbacks of the aforementioned current state of the art are the following:

The 'positive' brake is the one mainly used because of its constructive simplicity.

It has the disadvantage of requiring an additional mechanical system for the activation of the parking brake.
This system is composed of:
1) 'hand brake lever'
2) 'cable sheath' to transmit the pulling of the handbrake lever on the parking brake lever. The system must be opportunely calibrated to ensure that the parking brake lever is perfectly free during the movement of the vehicle and moreover the cables require periodic maintenance (lubrication, arrangements, substitution when worn out).

At present they are on the market as cartridges (SAHR, spring applied hydraulic release) that function as a negative brake as they are made up of an assembly of pre-compressed springs that act on a tie-rod, connected in turn to a release piston: these cartridges can be mounted to substitute the handbrake and carry out its functions. The tie-rod is connected to the handbrake cable and is adjusted so that the positive brake remains locked. When pressure is applied to the piston of the cartridge, this piston compresses the springs thus unlocking the brake. However, the inconvenience of this system is that it requires the maintenance of the cables.

The negative brake is a rather simple concept and is suitable as a parking brake.

It cannot be used as a service brake since the braking pair is not modulatable - with this type of brake - unless particular closed hydraulic circuits are used.

The combined brake partly resolves these drawbacks. The possible drawback of the combination lies in the fact that the two hydraulic circuits of the positive and negative brakes must coexist in an integrated system despite having different specific needs: the positive brake is preferably activated with fluid specific to brakes, normally requiring operational pressures of 5-10 MPa and specific gaskets for the fluid used; the negative brake is activated using the hydraulic circuit of the machine (therefore mineral oil), it can have variable operational pressures from 1 MPa if it is controlled by the circuit of the power steering to 20MPa if it is controlled by the circuit that operates the main services of a working vehicle. The gaskets must be adapted to the use of mineral oil and adapted, in turn, to bear the pressures exerted by the unlocking equipment. In addition to varying the working pressure it requires the redesigning of a large part of the system.

### Aim of this Invention

The aim of this invention is to avoid the aforementioned drawbacks and to introduce a type of combined brake that guarantees maximum versatility and minimum maintenance.

### Summary of the Invention

The problem is solved with the features of claim 1, namely by a combined braking equipment for vehicles of the type having an activation piston of a positive brake (9) using a spring-applied and hydraulically released parking brake, fixable to the brake body structure and acting on said activation piston (9),
characterized in that it comprises:
i - lever-operating means (1) that are substantially "L"- shaped with intermediate rocker hinging linking the said body structure of said brake (9), operating:
ii - on one side with its free thrust end (1) above the said activation piston of positive brake (9) and
iii - on the other (2), with the end of a tie-rod (7) elastically controlled by spring means (6), which is operated by a respective locking piston (4) working in a piston motion chamber (3) that is sealed (5) and activated by means of connection hole (8) from the fluid dynamic circuit of the vehicle itself,
and wherein:
- said spring means (6) are coaxial to the shank of said tie-rod (7) and operate with support in the shank of said "L"-shaped lever (1);
- said spring means (6) are constantly active to maintain said tie-rod in projection against a said support activation piston (9), in order to press its free end when in said dynamic-fluid circuit (8) pressure decreases, the coupling of said fluid dynamic circuit (8) being provided underneath said locking piston (4) on the side of the respective said tie-rod (7).
Sub-claims referring to preferred solutions.

### Description of an Embodiment of the Invention

These and other advantages will appear from the following description of a preferred embodiment with the aid of the included drawings, whose details are not to be considered as limitative but only as an example.

Figure 1 is the schematic view of a first solution of the application according to the present innovation, in the form of an unlocked brake where the coupling of the hydraulic circuit (8) takes place below the piston crown (4) and therefore provides said coupling in retraction from the piston shaft (7) against the contrary spring (6);

Figures 3,4,5 represent a specific preferred embodiment of the device according to the present invention wherein:

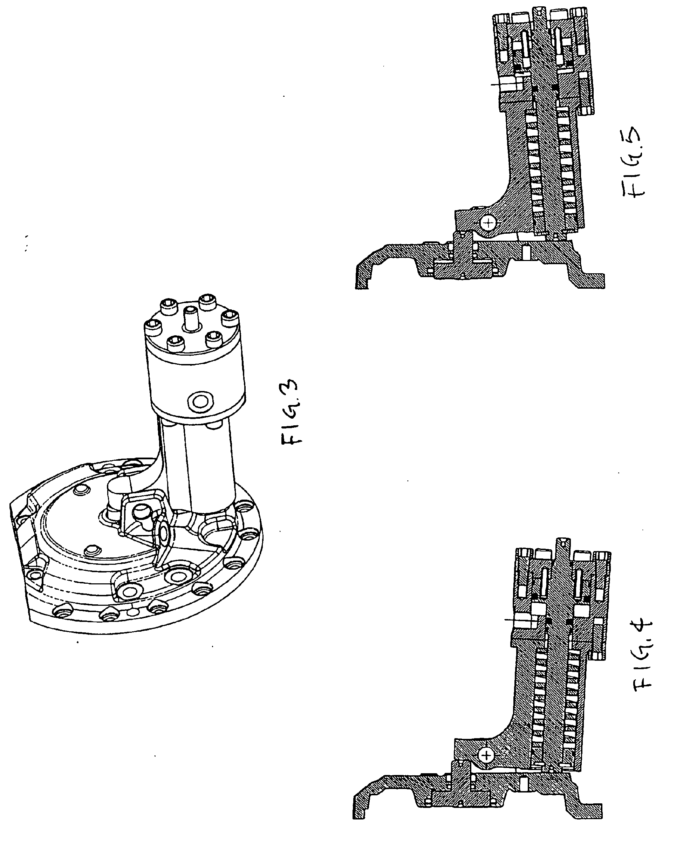

- Fig.3 represents a perspective view from the exterior of the assembly of the operating device;

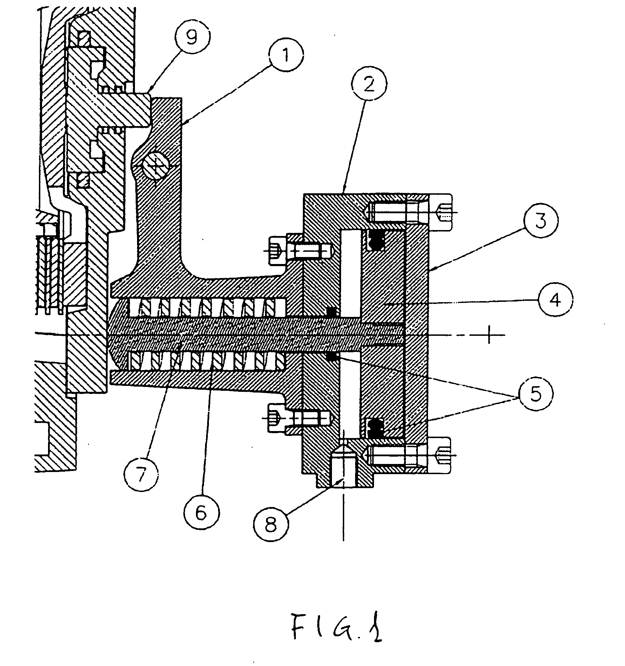

- Fig.4 and Fig.5 represent the same device as in Fig.3 in axial section respectively in a retracted position not influencing the braking system with hydraulic circuit under pressure, then with an unlocked brake as in the position of Fig.1 and Fig.5 with hydraulic circuit under pressure.

### Detailed Description of the Device in Accordance with the Figures

According to the Figures the different references indicate:
1)lever-operating means = the modified lever of the service or positive brake;
2) the body of the unlocking piston of the negative cartridge;
3) the closing cap of the piston motion chamber;
4) the locking piston;
5) the gaskets;
6) the elastic spring/means that keep the system braked;
7) the tie-rod-through which the spring force is discharged on the lever;
8) the threaded connection hole to the hydraulic brake unlocking system;
9) the activation piston of the positive brake;
11) stirrup fixed to the frame.

As disclosed by the previous Figures and as claimed, the invention relates to a system for the integration of the negative brake (SAHR) into the lever of positive type braking systems or systems of the type with a service brake with hydraulic/mechanical activation and a lever-operated parking brake or others accordingly.

The details can obviously vary as the device can be structured as in the schematic view of Fig.1.

## Claims

1. Combined braking equipment for vehicles of the type having an activation piston of a positive brake (9) using a spring-applied and hydraulically released parking brake fixable to the brake body structure and acting on said activation piston (9),
**characterized in that** it comprises:
i - lever-operating means (1) that are substantially "L"- shaped with an intermediate rocker hinge linking said lever operating means with said body structure of said brake (9), operating:
ii - on one side with its free thrust end (1) above the said activation piston of positive brake (9) and
iii - on the other (2), with the end of a tie-rod (7) elastically controlled by spring means (6), which is operated by a respective locking piston (4) working in a piston motion chamber (3) that is sealed (5) and activated by means of connection hole (8) from the fluid dynamic circuit of the vehicle itself,
and wherein:
- said spring means (6) are coaxial to the shank of said tie-rod (7) and operate with support in the shank of said "L"-shaped lever (1);
- said spring means (6) are constantly active to maintain said tie-rod in projection against said support activation piston (9), in order to press its free end when in said dynamic-fluid circuit (8) pressure decreases, the coupling of said fluid dynamic circuit (8) being provided underneath said locking piston (4) on the side of the respective said tie-rod (7).

2. Braking equipment according to claims 1, **characterized in that** said spring means are constantly active to maintain said tie-rod in re-entry in said "L"-shaped lever (1-2) while its projection in order to press against a support surface on the side opposite to the free end of the lever (1) with respect of the beginning of said lever (1), with the aim of pressing with said free end of the lever on said brake control (9) takes place only with a pressure increase in said fluid dynamic circuit (8) so as to exceed the thrust value of said retraction spring means (6), the coupling of said fluid dynamic circuit (8) being provided above said piston (4) on the opposite side to said shaft (7).

3. Braking equipment according to any of the previous claims, **characterized in that** the chamber of said piston (4) comprises an external cap (3) that is demountable.

## Patentansprüche

1. Kombinierte Bremsausrüstung für Fahrzeuge mit einem Aktivierungskolben für eine positive Bremse (9) unter Verwendung einer hydraulisch ausgelösten Standbremse mit Feder, die an der Bremskörperstruktur anzubringen ist und auf besagten Aktivierungskolben (9) einwirkt,
**gekennzeichnet dadurch, dass** sie folgendes umfasst:
i - Hebelmittel (1), die im wesentlichen L-förmig sind, mit einer Kniehebelverbindung sind, mit besagter Körperstruktur von besagter Bremse (9), die wie folgt arbeiten:
ii - auf einer Seite mit seinem freien Schubende (1) oberhalb des besagten Aktivierungskolbens der positiven Bremse (9) und
iii - auf der anderen (2), mit dem Ende einer Zugstange (7) elastisch kontrolliert von einem Federmittel (6), das von einem betreffenden Verschlusskolben (4) angetrieben wird, der in einer Kolbenbewegungskammer (3) arbeitet, die abgedichtet (5) ist und mittels Verbindungsloch (8) von dem flüssigkeitsdynamischen Schaltkreis des Fahrzeugs aktiviert wird,
und wobei:
- besagte Federmittel (6) koaxial zu dem Schaft der Zugstange (7) sind und mit Stütze in dem Schaft des L-förmigen Hebels (1) arbeiten;
- die Federmittel (6) dauernd aktiv sind, um die Zugstange in Vorsprung gegen einen Stütz-Aktivierungskolben (9) zu halten, um gegen sein freies Ende zu drücken, wenn in dem Schaltkreis mit dynamischer Flüssigkeit (8) der Druck abfällt, wobei die Verbindung von dem flüssigkeitsdynamischen Schaltkreis (8) unterhalb des Verschlusskolbens (4) an der Seite der Zugstange (7) vorgesehen ist.

2. Bremsausrüstung nach Anspruch 1, **gekennzeichnet dadurch, dass** die Federmittel dauernd aktiv sind, um besagte Zugstange in Wiedereintritt in den L-förmigen Hebel (1-2) zu halten, während ihr Vorsprung, um gegen eine Auflageoberfläche an der Seite gegenüber dem freien Ende des Hebels (1) in bezug auf den Anfang des Hebels (1) zu drücken, mit dem Ziel, mit dem freien Ende des Hebels auf die Bremsbetätigung (9) zu drücken, nur bei einem Druckanstieg in dem flüssigkeitsdynamischen Schaltkreis (8) erfolgt, um den Schubwert der Rückzugsfeder (6) zu überschreiten, wobei die Verbindung des flüssigkeitsdynamischen Schaltkreises (8) oberhalb des Kolbens (4) auf der Welle (7) gegenüberliegenden Seite erfolgt.

3. Bremsausrüstung nach einem beliebigen der vorherigen Patentansprüche, **gekennzeichnet dadurch, dass** die Kammer des Kolbens (4) eine äußere Kappe (3) umfasst, die demontierbar ist.

## Revendications

1. Equipement de freinage combiné pour véhicules du type ayant un piston d'activation d'un frein positif (9) utilisant un frein à main appliqué par ressort et libéré hydrauliquement fixable à la structure du corps de frein et agissant sur ledit piston d'activation (9),
**caractérisé en ce qu'**il comprend :
i - des moyens actionnés par levier (1) qui sont essentiellement en forme de "L" - avec une connexion d'articulation à bascule intermédiaire, lesdits moyens actionnés par levier avec ladite structure de corps dudit frein (9), agissant :
ii - d'un côté avec son extrémité de poussée libre (1) au-dessus dudit piston d'activation du frein positif (9) et
iii - de l'autre (2), avec l'extrémité d'un tirant (7) contrôlé élastiquement par des moyens de ressort (6), lequel est actionné par un piston de blocage respectif (4) fonctionnant dans une chambre de mouvement du piston (3) qui est scellée (5) et activée au moyen d'un trou de connexion (8) à partir du circuit dynamique de fluide du véhicule même,
et dans lequel :
- lesdits moyens de ressort (6) sont coaxiaux par rapport à la tige dudit tirant (7) et agissent avec le support dans la tige dudit levier en forme de "L" (1) ;
- lesdits moyens de ressort (6) sont constamment actifs pour maintenir ledit tirant en projection contre ledit piston d'activation de support (9), de manière à faire pression sur son extrémité libre lorsque la pression décroît dans ledit circuit dynamique (8), l'accouplement dudit circuit dynamique de fluide (8) étant pourvu au-dessous dudit piston de blocage (4) sur le côté dudit respectif tirant (7).

2. Equipement de freinage selon la revendication 1, **caractérisé en ce que** lesdits moyens de ressort sont constamment actifs pour maintenir ledit tirant en rentrée dans ledit levier en forme de "L" (1-2) pendant sa projection de manière à faire pression contre une surface de support sur le côté opposé à l'extrémité libre du levier (1) par rapport au commencement dudit levier (1), afin que la pression avec ladite extrémité libre du levier exercée sur ladite commande de frein (9) ait lieu seulement avec une augmentation de pression dans ledit circuit dynamique de fluide (8) de manière à dépasser la valeur de poussée desdits moyens de ressort de rétraction (6), l'accouplement dudit circuit dynamique de fluide (8) étant pourvu au-dessus dudit piston (4) sur le côté opposé dudit arbre (7).

3. Equipement de freinage selon l'une quelconque des revendications précédentes, **caractérisé en ce que** la chambre dudit piston (4) comprend un chapeau externe (3) qui est démontable.
